# NEUE EUROPÄISCHE PATENTSCHRIFT

(11) **EP 1 879 703 B2**
(45) Veröffentlichungstag und Bekanntmachung des Hinweises auf die Entscheidung über den Einspruch: **24.09.2014**
(45) Hinweis auf die Patenterteilung: 28.07.2010
(21) Anmeldenummer: 06763627.4
(22) Anmeldetag: 09.06.2006
(51) Int. Cl.: B05D 7/14, F16L 9/147, B05D 7/00

(54) **MEHRLAGIGE KUNSTSTOFF-KORROSIONSSCHUTZBESCHICHTUNG MIT VERBESSERTEN EIGENSCHAFTEN**
MULTILAYER PLASTIC ANTICORROSIVE COATING HAVING IMPROVED PROPERTIES
REVETEMENT ANTI-CORROSION EN PLASTIQUE MULTICOUCHE PRESENTANT DES PROPRIETES AMELIOREES

(30) Priorität: 14.06.2005 DE 102005027600
(43) Veröffentlichungstag der Anmeldung: 23.01.2008
(73) Patentinhaber: Basell Polyolefine GmbH, 50389 Wesseling (DE); Mülheim Pipecoatings GmbH, 45473 Mülheim a.d. Ruhr (DE)
(72) Erfinder: VOGT, Heinz, 65929 Frankfurt am Main (DE); GRONSFELD, Peter Josef, 47918 Tönisvorst (DE); SCHMIDT, Klaus, 59439 Holzwickede (DE)
(74) Vertreter: Michalski Hüttermann & Partner Patentanwälte mbB
(86) Internationale Anmeldenummer: PCT/EP2006/063061
(87) Internationale Veröffentlichungsnummer: WO 2006/134077

(56) Entgegenhaltungen:
- EP-A- 0 346 101
- GB-A- 2 181 437
- GB-A- 2 410 308
- PATENT ABSTRACTS OF JAPAN Bd. 005, Nr. 132 (C-068), 22. August 1981 (1981-08-22) & JP 56 065667 A (MITSUBISHI PETROCHEM CO LTD), 3. Juni 1981 (1981-06-03)

## Beschreibung

Die Erfindung betrifft eine Beschichtung und ein Verfahren zum Beschichten von äußeren Oberflächen. Insbesondere betrifft die Erfindung ein Verfahren zum Beschichten von äußeren Oberflächen von Stahlrohrleitungen mit unter Wassereinwirkung vernetzbaren Polymer.

Unter Stahlrohrleitungen im Sinne dieser Erfindung versteht man Hohlkörper, die zum Transport von körperlichen Medien wie Gasen, Flüssigkeiten oder Feststoffen geeignet sind.

Stahlrohrleitungen werden weltweit für den wirtschaftlichen Transport von Erdöl und Erdölprodukten, Gas, Wasser, Dampf, Feststoffen und anderen Medien von der Fund- oder Produktionsstätte zum Verbraucher verwendet. Stahlrohrleitungen müssen gegen Korrosion geschützt sein, um die Betriebssicherheit der Rohrleitungen über einen langen Zeitraum zu erhalten. Dazu werden die Rohrleitungen üblicherweise mit einem werksseitig aufgebrachten Korrosionsschutz versehen. Die heute gebräuchlichsten Beschichtungstechniken sind:
- 1- oder 2- Lagen-Beschichtung mit FBE (Fusion bonded Epoxy);
- 3-Lagen-Beschichtung aus Epoxy, Haftvermittler und einer Decklage aus nicht vernetztem PE (Polyethylen) oder PP (Polypropylen). Diese Beschichtung wird auch als MAPEC-Beschichtung bezeichnet.

Der Langzeit-Korrosionsschutz ist aber nur dann gegeben, wenn die Beschichtung bei Transport, Verlegung und Betrieb der Rohrleitungen nicht beschädigt wird. Um Beschädigungen von FBE-Beschichtungen beim Transport und bei Verlegearbeiten zu vermeiden, müssen diese extrem vorsichtig gehandhabt werden. Trotz der aufwendigen Vorsorgemaßnahmen ist der Reparaturaufwand dennoch beträchtlich.

Zur Vermeidung von nachträglichen Beschädigungen sowohl der verlegten FBE- als auch der 3-Lagen-beschichteten Rohrleitungen während des Betriebes werden diese üblicherweise mit feinkörnigem Füllmaterial, bevorzugt Sand oder anderes Mahlgut, in einem Rohrleitungsgraben eingebettet. Nachteilig hieran ist insbesondere, dass feinkörniges und damit teueres Füllmaterial zwingend erforderlich ist, um Beschädigungen der Rohrleitungen zu vermeiden. Teilweise muss die Einbettung mittels Sand erfolgen.

Die europäische Patentanmeldung EP 619 343 A1 stellt auf eine Außenbeschichtung für Rohrleitungen ab, deren äußerste Schicht eine durch Silane quervernetzte Polymerzusammensetzung aus Polypropylen und Copolymeren von Propylen, Ethylen und anderen Monomeren umfasst. Dieses Material wird zur Quervernetzung mit einem Peroxid und einem ungesättigtem Silan coextrudiert. In einem weiteren Schritt wird das so erhaltene Material mit einem Quervernetzungskatalysator nochmals coextrudiert. Schließlich wird das Material für mehrere Tage unter Wasser gelagert, um die Vernetzung abzuschließen. Mit diesem so behandelten Material wird danach eine Stahlrohrleitung beschichtet.

Nachteilig hieran ist, dass für die Herstellung der vorgenannten Außenbeschichtung zusätzliche, aufwendige und damit kostspielige Verfahrensschritte nötig sind. Es muss nicht nur das silanvernetzte Polyolefin für mehrere Tage unter Wasser gelagert werden, was Kapazitäten bindet. Weitere Produktionskapazitäten werden dadurch gebunden, dass Rohrleitungen nach dem Auftragen der Zwischenschichten gelagert werden müssen, bevor die Außenschicht aus vernetztem Polyolefin aufgetragen wird.

Die Aufgabe der Erfindung ist es, wenigstens einen der vorgenannten Nachteile des Standes der Technik zu überwinden. Insbesondere ist es Aufgabe der Erfindung, ein vereinfachtes Verfahren zum Beschichten von Rohrleitungen mit unter Wassereinwirkung vernetzbarem Polymer bereitzustellen.

Die Aufgabe wird erfindungsgemäß gelöst durch ein Verfahren zum Beschichten von äußeren Oberflächen von Stahlrohrleitungen mit unter Wassereinwirkung vernetzbarem Polymer, umfassend die Schritte:
a) Beschichten der äußeren Oberfläche der Stahlrohrleitung mit wenigstens einem unter Wassereinwirkung vernetzbaren Polymer, wobei das verwendete vernetzbare Polymer alkoxysilangepfropftes HDPE umfasst;
b) Vernetzung des vernetzbaren Polymers mittels Einwirkung von Wasser bei erhöhter Temperatur unter Ausbildung einer vernetzten Polymerschicht, bis man einen Vernetzungsgrad von ≥30% bis ≤80% erreicht.

Der Vernetzungsgrad kann beispielsweise ≥40% bis ≤70%, vorzugsweise ≥45% bis ≤65% und bevorzugt etwa 50% ausmachen. Der Vernetzungsgrad kann beispielsweise nach ISO 10147 bestimmt werden.

Das verwendete unter Wassereinwirkung vernetzbare Polymer kann alkoxysilangepfropftes HDPE (high density polyethylene; Polyethylen hoher Dichte) in einem Bereich von ≥50 Gewichts-% bis ≤100 Gewichts-%, bezogen auf das Gesamtgewicht des verwendeten vernetzbaren Polymers, umfassen. Es ist jedoch auch möglich, dass der Anteil an HDPE in einem Bereich von ≥70 Gewichts-% bis ≤100 Gewichts-% oder in einem Bereich von ≥98 Gewichts-% bis ≤100 Gewichts-% liegt.

HDPE als solches im Sinne dieser Erfindung bezeichnet ein Polyethylen, welches vor der Vernetzung eine Dichte von ≥0.940 g/cm³ bis ≤0.965 g/cm³, bevorzugt ≥0.945 g/cm³ bis ≤0.960 g/cm³, noch mehr bevorzugt ≥0.950 g/cm³ bis ≤0.960 g/cm³, am meisten bevorzugt 0.952 g/cm³ bis 0,955 g/cm³ aufweist und/oder eine Schmelzflußrate, ausgedrückt als MFR (190/2.16), von ≥0.3 g/10 min bis ≤10.0 g/10 min, bevorzugt ≥1.0 g/10 min bis ≤8.0 g/10 min, noch mehr bevorzugt ≥3 g/10 min bis ≤6.6 g/10 min, am meisten bevorzugt 3,5 g/10min bis 6.5 g/10 min aufweist.

Die Dichte des HDPE kann beispielsweise gemäß ISO 1183 bestimmt werden. Die Schmelzflußrate, ausgedrückt als MFR (190/2.16), kann beispielsweise gemäß ISO 1133 bestimmt werden.

Das HDPE kann in Gegenwart eines katalytischen Systems aus einem Ziegler-, Philips-, oder Metallocen- Katalysators oder Kombinationen aus solchen und einem Cokatalysator über eine einstufige oder mehrstufige, aus aufeinander folgenden Polymerisationsschritten bestehenden Reaktionsabfolge hergestellt sein und demnach unimodale oder multimodale Molmassenverteilungen aufweisen.

Das HDPE kann Zusatzstoffe enthalten. Solche Zusatzstoffe sind vorzugsweise Wärme- und Verarbeitungs-Stabilisatoren, Antioxidantien, UV-Absorber, Lichtschutzmittel, Metalldesaktivatoren, peroxidzerstörende Verbindungen, organische Peroxide, basische Costabilisatoren in Mengen von ≥0 bis ≤10 Gew.-%, vorzugsweise ≥0 bis ≤5 Gew.-%, aber auch Ruß, Füllstoffe, Pigmente oder Kombinationen von diesen in Gesamtmengen von ≥0 bis ≤30 Gew.-%, bezogen auf das Gesamtgewicht der Mischung.

Erfindungsgemäß können die auf die Polymerkette aufgepfropften Alkoxysilane beispielsweise durch radikalische Addition, Cycloaddition, elektrophile Addition oder En-Reaktionen auf die Polymerkette aufgepfropft werden. Vorteilhaft sind als Edukte alkenylsubstituierte Alkoxysilane wie Vinylsilanester ausgewählt aus der Gruppe umfassend Vinyltrimethoxysilan, Vinyldimethoxymethylsilan, Vinyltriethoxysilan, Vinyltriacetoxysilan und/oder Vinyltris(2-methoxyethoxy)silan. Dabei ist es unerheblich, ob der Pfropfprozeß in einem separaten, vorgeschalteten Extrusionsprozeß oder während der Extrusion der Beschichtungsmasse erfolgt. Bei letzterem kann gleichzeitig mit dem aufzupfropfenden Silan eine Lewis-Säure als Vernetzungsbeschleuniger ausgewählt aus der Gruppe Metall-Carboxylate umfassend organische Zinn-Verbindungen, darunter bevorzugt Dibutylzinndilaurat, Dioktylzinndilaurat, Dibutylzinndicapronat, Zinnacetat und Zinncapronat, eingebracht werden.

Gemäß der vorliegenden Erfindung kann das unter Wassereinwirkung vernetzbare Polymer, bevorzugt HDPE, einen Gehalt an durch reaktive Extrusion aufgepfropften Vinylsilanester von ≥1 Gew.-% bis ≤5 Gew.-%, bevorzugt ≥1.4 Gew.-% bis ≤2,5 Gew.-%, noch mehr bevorzugt 1.8 Gew.-% aufweisen.

Die Vernetzung des silangepfropften HDPEs erfolgt durch Einwirken von Wasser bei erhöhter Temperatur. Ohne auf eine Theorie festgelegt zu sein, wird angenommen, dass zunächst die Alkoxysilane unter Alkoholabspaltung zu den entsprechenden Silanolen teilweise oder vollständig hydrolysiert werden. In einem weiteren Schritt kondensieren die Silanolzentren unter Abspaltung von Wasser und unter Ausbildung von Siloxanbrücken. Unter "erhöhter Temperatur" im Sinne dieser Erfindung versteht man eine Temperatur oberhalb der Raumtemperatur. Beispielsweise kann die Temperatur ≥50 °C bis ≤350 °C, bevorzugt ≥150 °C bis ≤300 °C, noch mehr bevorzugt ≥220 °C bis ≤260 °C betragen.

Durch den erfindungsgemäß gesteuerten Vernetzungsgrad lässt sich die Widerstandsfähigkeit der Polymerschicht deutlich verbessern. Dieser Vernetzungsgrad führt bei der erfindungsgemäß hergestellten Polymerschicht beispielsweise zu einer erhöhten Schlagzähigkeit und Kerbschlagzähigkeit. Dieses ist beispielsweise von Vorteil, wenn der beschichtete Gegenstand einer Umgebung mit hoher mechanischer Beanspruchung ausgesetzt ist, wie beispielsweise bei einer Verlegung der Stahlrohrleitung in steinigen Böden oder gegenüber starken Temperaturschwankungen.

Zwecks Vernetzung lässt man bei dem erfindungsgemäßen Verfahren Wasser auf die vernetzbare Polymerschicht einwirken, bis ein Vernetzungsgrad von ≥30% bis ≤80% erreicht ist. Es ist jedoch auch möglich, einen niedrigeren oder höheren Vernetzungsgrad durch eine kürzere oder längere Einwirkung von Wasser zu erreichen. Beispielsweise kann der Vernetzungsgrad ≥25% bis ≤80% oder ≥20% bis ≤80% betragen. Vernetzungsgrade unter 20% ergeben keine vorteilhaften Werkstoffeigenschaften und führen dazu, dass das beschichtete Produkt nachbehandelt werden muss. Vemetzungsgrade von über 80% sind mittels Einwirkung von Wasser nur schwer zu erreichen. Hier spielt die Konzentration der Silanzentren auf der Polymerkette eine Rolle, da nicht jedes freie Silanzentmm in erreichbarer Nähe ein weiteres Silanzentrum zur Verfügung hat, mit dem es vernetzen kann. Außerdem haben derartige vernetzte Beschichtungen erheblich verschlechterte mechanische Eigenschaften.

Der Vernetzungsgrad lässt sich mit den üblichen dem Fachmann bekannten Methoden wie IR-(Infrarot)- oder NMR- (Kernresonanz)-Spektroskopie bestimmen. Vorteilhaft lässt er sich im Rahmen der vorliegenden Erfindung mittels Bestimmung des Gelgehalts nach der Norm ISO 10147 bestimmen.

Die erfindungsgemäßen Stahlrohrleitungen eignen sich gut zum Transport von Erdöl und Erdölprodukten, Gas, Wasser, Dampf, Feststoffen und anderen Medien von der Fund- oder Produktionsstätte zum Verbraucher.

Erfindungsgemäß vorteilhaft ist, dass man die Quervernetzung des unter Wassereinwirkung vernetzbaren Polymers direkt nach dem Auftragen der vernetzbaren Schicht auf der zu beschichtenden Stahlrohrleitungen selbst und in einem Arbeitsgang während der Beschichtung der Stahlrohrleitungen durchführen kann.

Bei dem erfindungsgemäßen Verfahren wurde nun überraschenderweise gefunden, dass eine inline-Vernetzung möglich ist, wenn die Verfahrensschritte - Abkühlung der Beschichtung und der Stahlrohrleitungen - speziell aufeinander abgestimmt sind und aufeinander folgen.

Das erfindungsgemäße Verfahren erlaubt somit eine ökonomisch attraktive großtechnische Anwendung von quervernetzbarem Polymer als äußere Funktionsschicht einer mehrlagigen Korrosionsschutzbeschichtung von Stahlrohrleitungen.

Erfindungsgemäß kann bevorzugt vorgesehen sein, dass die Stahlrohrleitung erfindungsgemäß mit mindestens 2 unterschiedlichen äußeren Beschichtungen, vorteilhafterweise mit mindestens 3 unterschiedlichen äußeren Beschichtungen, besonders bevorzugt mit mindestens 4 unterschiedlichen äußeren Beschichtungen versehen wird.

Als äußerste obere Stahlrohrleitungsbeschichtung ist in vorteilhafter Weise die erfindungsgemäße Schicht aus vernetztem Polymer, insbesondere silanvernetztem HDPE, vorgesehen. Die zusätzlichen aufgebrachten Schichten können ausgewählt sein aus der Gruppe umfassend Epoxidharz-Grundierung, Haftvermittler und/oder HDPE.

Beispielsweise kann man als erste Schicht auf die Stahlrohrleitung eine Beschichtung basierend auf Epoxidharz, als zweite Schicht eine Beschichtung basierend auf Haftvermittler und darüber eine Schicht basierend auf HDPE aufbringen. Als äußerste Schicht bringt man auf die vorgenannten Schichten die erfindungsgemäße vernetzbare Polymerschicht, vorzugsweise silanvernetzbares HDPE, auf.

Die Verwendung eines Epoxidharzes als erste Schicht auf die Stahlrohrleitung ist vorteilhaft, da die Materialien der Stahlrohrleitung und der weiter aufzutragenden Schichten inkompatibel sein können. Somit sorgt das Epoxidharz für eine gute Grundierung und Haftung der weiteren Schichten. Weiterhin ist es günstig, dass Epoxidharze im Pulversprühverfahren gleichmäßig aufgetragen werden können. Dieses Verfahren ist lösungsmittelfrei und daher unter Umweltschutz- und finanziellen Aspekten attraktiv. Die Dicke der aufgetragenen Schicht lässt sich so steuern, dass eine vollständige Bedeckung der Stahlrohrleitung bei gleichzeitig möglichst geringem Epoxidharzverbrauch gewährleistet ist. Man kann beispielsweise das Epoxidharz mit einer Schichtdicke von ≥0.08 mm bis ≤0.16 mm, bevorzugt ≥0.10 mm bis ≤0.13 mm, noch mehr bevorzugt 0.125 mm auftragen.

Der nächste Schritt in der Beschichtung kann das Auftragen eines polymeren Haftvermittlers sein. Solche Haftvermittler haben die Aufgabe, eine dauerhafte und belastbare Verbindung zwischen der Grundierung (und somit dem Substrat) und einer weiteren äußeren Schicht herzustellen. Die Dicke der Haftvermittlerschicht wird vorteilhafterweise so gewählt, dass ein gleichmäßiges Auftragen ohne Reißen der Haftvermittlerschicht auf der einen Seite und einer guten Wirksamkeit des Haftvermittlers andererseits erreicht wird. Bei zu dünnen Schichten besteht die Gefahr, dass der Haftvermittler aufgrund von Rissen während des Auftragens nicht vollständig das Substrat bedeckt. Bei zu dicken Schichten überwiegen bei den Eigenschaften des Haftvermittlers nicht mehr die Haftungen an den jeweiligen Substratgrenzflächen, sondern die Kohäsionskräfte innerhalb des Haftvermittlers. Dadurch sinken die Klebeeigenschaften. Man kann weiterhin beispielsweise den Haftvermittler mit einer Schichtdicke von ≥0.15 mm bis ≤0.30 mm, bevorzugt ≥0.22 mm bis ≤0.27 mm, noch mehr bevorzugt 0.25 mm auftragen.

Als nächstes kann man eine HDPE-Deckschicht auftragen. Solche Schichten können bei geeignet gewählter Dicke eine Barriere unter anderem gegen Temperaturschwankungen, elektrische Ströme und Undichtigkeiten der Stahlrohrleitung darstellen. Um dieses Ziel zu erreichen, kann man beispielsweise die HDPE-Deckschicht mit einer Schichtdicke von ≥2.8 mm bis ≤3.2 mm, bevorzugt ≥2.9 mm bis ≤3.1 mm, noch mehr bevorzugt 3 mm auftragen.

Die äußerste Schicht kann dann eine erfindungsgemäße vernetzbare Polymerschicht, beispielsweise eine silanvernetzbare HDPE-Schicht, sein. Hierdurch wird, wie bereits erwähnt, eine erhöhte Schlagzähigkeit und Kerbschlagzähigkeit der Beschichtung erreicht, weshalb die erfindungsgemäß beschichtete Stahlrohrleitung in Umgebungen mir hoher mechanischer Belastung eingesetzt werden kann. Die Dicke der silanvernetzbaren HDPE-Schicht richtet sich nach den Anforderungen der wirtschaftlichen Verwendung des Materials und der Funktionalität, beispielsweise um eine genügende Widerstandsfähigkeit gegen scharfkantiges Einbettungsmaterial der Stahlrohrleitung zu erreichen. Man kann beispielsweise die silanvernetzbare HDPE-Schicht mit einer Schichtdicke von ≥0.8 mm bis ≤1.2 mm, bevorzugt ≥0.9 mm bis ≤1.1 mm, noch mehr bevorzugt 1 mm auftragen.

Die Aufbringung der silanvernetzbaren HDPE-Schicht kann nach den bei Stahlrohrleitungen gängigen Beschichtungstechniken, wie Wickel-Extrusionsverfahren oder Schlauchextrusion (cross head) erfolgen. Die Aufbringung der vernetzbaren äußeren Schicht kann dabei entweder in Co-Extrusion über eine Düse zusammen mit einem gängigen Polymer, das für die Rohrleitungsbeschichtung üblicherweise als äußere Schicht eingesetzt wird, erfolgen, oder als separat extrudierte und applizierte Beschichtungsmasse auf die unmittelbar zuvor extrudierte und applizierte Polymer-Decklage erfolgen. Direkt im Anschluss an das Auftragen des unter Wassereinwirkung quervernetzbaren Polymers wird die beschichtete Stahlrohrleitung und somit auch die vernetzbare Polymerschicht mit Wasser berieselt.

Die silanvernetzte Polymerschicht trägt unter anderem aufgrund ihrer Vernetzung vorteilhaft zu den Eigenschaften der Stahlrohrleitung bei. In einer weiteren Ausführungsform der vorliegenden Erfindung beträgt der Siliziumgehalt der vernetzten Polymerschicht ≥0.10 Gewichts-% bis ≤1.00 Gewichts-%, bevorzugt ≥0.30 Gewichts-% bis ≤0.40 Gewichts-%, mehr bevorzugt ≥0.33 Gewichts-% bis ≤0.35 Gewichts-%. Bei solchen Siliziumgehalten werden die gewünschten Eigenschaften wie Dehnung, Bruchdehnung, Schlagzähigkeit oder Kerbschlagzähigkeit erreicht, ohne übermäßiges siliziumhaltiges Material mitzuführen. Die Bestimmung des Siliziumgehalts kann nach den dem Fachmann geläufigen Methoden wie Elementaranalyse oder Atomabsorptionsspektroskopie erfolgen.

Zwecks Verbesserung der Vernetzung kann vorgesehen sein, dass das Wasser in einer laminaren Strömung über die Stahlrohrleitung fließt. Durch das Vermeiden einer turbulenten Strömung werden hierbei mehrere Vorteile erreicht. Zum einen ist sichergestellt, dass das Wasser die gesamte zu überströmende Oberfläche auch erreicht und nicht durch Wirbel oder Strömungsabrisse Bereiche der Stahlrohrleitungsoberfläche entstehen, welche nicht oder nicht ausreichend vom Wasser überströmt werden. Im Zusammenhang damit wird so auch erreicht, dass die beschichtete Stahlrohrleitung gleichmäßig abkühlt und die durch Wasser vernetzbare Polymerschicht gleichmäßig vernetzt.

In einer weiteren bevorzugten Ausführungsform der vorliegenden Erfindung beträgt der Zeitraum des Wasserbehandlungsschrittes zur Vernetzung der Polymerschicht ≥0.5 Minuten bis ≤5.0 Minuten, bevorzugt ≥1.0 Minuten bis ≤3.0 Minuten, mehr bevorzugt ≥1.9 Minuten bis ≤2.1 Minuten pro Meter der sich in Längsrichtung bewegendenStahlrohrleitung. Beispielsweise würde so eine 8 Meter lange Stahlrohrleitung über einen Zeitraum von ca. 16 Minuten mit Wasser behandelt. Diese Dauer stellt sicher, dass der gewünschte Vernetzungsgrad erreicht wird, ohne Produktionskapazitäten unnötig zu binden.

In einer weiteren bevorzugten Ausführungsform der vorliegenden Erfindung erfolgt die Vernetzung des unter Wassereinwirkung vernetzbaren Polymers bei einer Temperatur von ≥ 50 °C bis ≤350 °C, bevorzugt ≥150 °C bis ≤300 °C, noch mehr bevorzugt ≥220 °C bis ≤260 °C. Hiermit ist Temperatur der vernetzbaren Polymerschicht vor der Behandlung mit Wasser gemeint. Bei niedrigeren Temperaturen verläuft die Vernetzungsreaktion nicht ausreichend schnell und das Verdampfen der durch Silanhydrolyse gebildeten Alkohole erfolgt nicht vollständig. Andererseits ist die aufgetragene vernetzbare Polymerschicht bei höheren Temperaturen nicht mehr ausreichend stabil und mit einer für eine gleichmässige Beschichtung zu geringen Viskosität ausgestattet.

In einer weiteren bevorzugten Ausführungsform der vorliegenden Erfindung umfasst das erfindungsgemäße Verfahren die folgenden Schritte:
- Aufheizen einer Stahlrohrleitungen auf ≥170 °C bis ≤230 °C, bevorzugt ≥180 °C bis ≤220 °C, noch mehr bevorzugt auf ≥190 °C bis ≤210 °C;
- Auftragen eines Epoxidharzes durch ein elektrostatisches Pulversprühverfahren mit einer Schichtdicke von ≥0.08 mm bis ≤0.16 mm, bevorzugt ≥0.10 mm bis ≤0.13 mm, noch mehr bevorzugt 0.125 mm;
- Auftragen eines Haftvermittlers mittels Wickelextrusionsverfahren mit einer Schichtdicke von ≥0.15 mm bis ≤0.30 mm, bevorzugt ≥0.22 mm bis ≤0.27 mm, noch mehr bevorzugt 0.25 mm;
- Auftragen einer HDPE-Deckschicht mittels Extrusion mit einer Schichtdicke von ≥2.8 mm bis ≤3.2 mm, bevorzugt ≥2.9 mm bis ≤3.1 mm, noch mehr bevorzugt 3 mm;
- Auftragen einer alkoxysilangepfropftes HDPE umfassenden Polymerschicht mittels Extrusion mit einer Schichtdicke von ≥0.8 mm bis ≤1.2 mm, bevorzugt ≥0.9 mm bis ≤1.1 mm, noch mehr bevorzugt 1 mm;
- Behandeln der Stahlrohrleitung mit Wasser, wobei das Wasser vorzugsweise eine Temperatur von ≥10 °C bis ≤40 °C, bevorzugt ≥20°C bis ≤30 °C, noch mehr bevorzugt 25 °C aufweist.

Die Extrusionstemperatur beim Auftragen des Haftvermittlers ist von Bedeutung, da bei bei höheren Temperaturen eine schnellere Anbindung an die Grundierungsschicht gewährleistet ist. Somit ist es möglich, Stillstände im laufenden Produktionsverfahren zu vermeiden. Die Temperatur wird nach oben hin durch die thermische Stabilität und Viskosität des Haftvermittlers begrenzt. In einer weiteren bevorzugten Ausführungsform der vorliegenden Erfindung beträgt daher die Extrusionstemperatur beim Auftragen des Haftvermittlers ≥200 °C bis ≤250 °C, bevorzugt ≥210 °C bis ≤240 °C, noch mehr bevorzugt ≥220 °C bis ≤230°C.

Ebenso ist die Extrusionstemperatur beim Auftragen der HDPE-Deckschicht von Bedeutung, da bei bei höheren Temperaturen eine schnellere Anbindung an die Haftvermittlerschicht gewährleistet ist. Somit ist es ebenfalls möglich, Stillstände im laufenden Produktionsverfahren zu vermeiden. Die Temperatur wird nach oben hin durch die thermische Stabilität und Viskosität der HDPE-Deckschicht begrenzt. In einer weiteren bevorzugten Ausführungsform der vorliegenden Erfindung beträgt daher die Extrusionstemperatur beim Auftragen der HDPE-Deckschicht ≥220 °C bis ≤240 °C, bevorzugt ≥225 °C bis ≤235 °C, noch mehr bevorzugt 230 °C.

Ein Vorteil des erfindungsgemäßen Verfahrens ist, dass man Stahlrohrleitungen innerhalb eines kurzen Zeitraumes beschichten kann. Beispielsweise kann die Liniengeschwindigkeit der Stahlrohrleitung während der Beschichtung ≥0.5 m/min bis ≤4 m/min, bevorzugt ≥1 bis ≤3 m/min, noch mehr bevorzugt 2 m/min ausmachen.

Eine hohe Temperatur der Stahlrohrleitung vor Beginn der Wasserkühlung ist aus mehreren Gründen vorteilhaft. Einerseits gewährt eine hohe Rohrleitungstemperatur eine gute Verschweißung der PE-Decklage und der silanvernetzbaren HDPE-Schicht. Hierdurch findet eine feste Bindung untereinander statt und es werden Ritzen oder Löcher in der Beschichtung vermieden. Weiterhin ist für eine hohe Reaktionsgeschwindigkeit des sich anschließenden Vernetzungsschrittes eine hohe Temperatur förderlich. In einer weiteren bevorzugten Ausführungsform der vorliegenden Erfindung beträgt daher die Rohrleitungstemperatur vor Beginn der Wasserkühlung ≥170 °C bis ≤210 °C, bevorzugt ≥180°C bis ≤200 °C, noch mehr bevorzugt 190 °C.

Aus den vorstehend genannten Gründen, jedoch noch viel direkter ist eine hohe Temperatur der Oberfläche der Beschichtung vor der Wasserkühlung und somit dem Quervernetzungsschritt bedeutsam. In einer weiteren bevorzugten Ausführungsform der vorliegenden Erfindung beträgt daher die Oberflächentemperatur der Beschichtung vor Beginn der Wasserkühlung ≥220 °C bis ≤260 °C, bevorzugt ≥230 °C bis ≤250 °C, noch mehr bevorzugt 240 °C.

Die Quervernetzung läuft nach dem Berieseln mit Wasser jedoch noch zu einem gewissen Umfang weiter. Um diese Reaktion möglichst weit fortschreiten zu lassen, ist eine erhöhte Temperatur der Oberfläche der Beschichtung von Vorteil. In einer weiteren bevorzugten Ausführungsform der vorliegenden Erfindung beträgt somit die Oberflächentemperatur der Beschichtung nach Durchlaufen der Wasserkühlung ≥40 °C bis ≤80 °C, bevorzugt ≥50 °C bis ≤70 °C, noch mehr bevorzugt 60 °C.

Ebenso ist eine erhöhte Temperatur der Stahlrohrleitung selbst nach dem Kontakt mit Wasser von Vorteil für den Fortgang der Vernetzungsreaktion, da die Stahlrohrleitung das Material in der Tiefe der zu vernetzenden Schicht auf einer günstigen Temperatur hält. In einer weiteren bevorzugten Ausführungsform der vorliegenden Erfindung beträgt daher die Temperatur der Stahlrohrleitung nach Durchlaufen der Wasserkühlung ≥40 °C bis ≤100 °C, bevorzugt ≥50 °C bis ≤90 °C, noch mehr bevorzugt ≥60 °C bis ≤80 °C.

Die Verweilzeit der gesamten Stahlrohrleitung in der Kühlstrecke bestimmt entscheidend das Ausmaß der Vernetzungsreaktion durch die kontinuierliche Berieselung mit Wasser. Weiterhin kann nach dem Abkühlen der Stahlrohrleitung diese gefahrlos gehandhabt werden, da keine für Mitarbeiter oder Maschinen gefährlichen Temperaturen mehr vorliegen. In einer weiteren bevorzugten Ausführungsform der vorliegenden Erfindung beträgt somit die Verweilzeit Stahlrohrleitung in der Kühlstrecke ≥14 min bis ≤18 min, bevorzugt ≥15 min bis ≤17 min, noch mehr bevorzugt 16 min.

Für Stahlrohrleitungen mit geringerem Durchmesser kann es zweckmäßig sein, eine Beschichtung durch Schlauchextrusion, also über eine Ringdüse, vorzunehmen. Hierbei können auch eine nicht vernetzbare und eine vernetzbare Polymerschicht coextrudiert werden. Bei größeren Leitungen bietet sich als Alternative die Beschichtung durch Wickelextrusion an.

Ein wesentlicher Vorteil der erfindungsgemäß beschichteten Stahlrohrleitungen ist deren Widerstandsfähigkeit gegen mechanische Schädigungen, selbst bei extrem widrigen Bedingungen. Sowohl die Bruchdehnung der Beschichtung als auch das Verhalten im ESCR-Test treffen Aussagen darüber, wie eine Beschichtung über längere Zeit unter widrigen Transport- und Verlegebedingungen oder Umweltbedingungen wie Kälte, UV-Strahlung, chemisch belastete Böden oder Mikroorganismen überdauert.

Die silanvernetzte Polymerschicht trägt vorteilhaft zu den Eigenschaften der Beschichtung und damit zu den Einsatzmöglichkeiten der Stahlrohrleitung bei. So beträgt in einer vorteilhaften Ausführungsform der vorliegenden Erfindung die Bruchdehnung der Beschichtung bei -45 °C gemessen ≥135% bis ≤400%, bevorzugt ≥200% bis ≤300%, noch mehr bevorzugt ≥240% bis ≤260%. Hierdurch wird eine Verwendung der Stahlrohrleitung in kalten Umgebungen, beispielsweise in einem Permafrostboden, möglich.

Eine weitere vorteilhafte Eigenschaft der Beschichtung, zu der die silanvernetzte Polymerschicht beiträgt, ist deren Spannungsrissfestigkeit. In einer weiteren vorteilhaften Ausführungsform der vorliegenden Erfindung bleibt die Beschichtung im environmental stress crack resistance (ESCR-) Test (FNCT bei 4.0 MPa, 80 °C) über einen Zeitraum von ≥100 h bis ≤10000 h, bevorzugt ≥500 h bis ≤2000 h und weiter bevorzugt ≥900 h bis ≤1100 h stabil. Hierdurch wird eine Verwendung in scharfkantigen Umgebungen ermöglicht. Weiterhin sinkt dadurch die Empfindlichkeit der beschichteten Rohrleitung beim Transport.

Gemäß einer vorteilhaften Ausführungsform der vorliegenden Erfindung kann die äußere Oberfläche der Stahlrohrleitung mit mindestens zwei unterschiedlichen Lagen, vorzugsweise mit mindestens drei Lagen und bevorzugt mit mindestens vier unterschiedlichen Lagen beschichtet sein.

Als äußerste Lage beziehungsweise Schicht weist die Stahlrohrleitung bevorzugt die erfindungsgemäß herstellbare Beschichtung aus silanvernetztem HDPE, auf.

Die zusätzlichen Schichten können ausgewählt sein aus der Gruppe umfassend Epoxy-Harz, Haftvermittler und/oder HDPE. Vorzugsweise weist die Rohrleitung als erste innere äußere Beschichtung eine erste Lage basierend auf Epoxy-Harz auf. Auf diese erste Lage kann eine zweite äußere Beschichtung aufgebracht sein, die auf einem Haftvermittler basiert. Auf der zweiten Lage oder der ersten Lage kann eine weitere äußere dritte Beschichtung basierend auf HDPE aufgebracht sein, wobei als äußerste obere Lage eine Schicht aus silanvernetztem HDPE angeordnet ist.

Weiterhin stellt die Erfindung eine Stahlrohrleitung zur Verfügung, welches mindestens eine äußere Oberflächenbeschichtung umfasst, die auf einem ersten vernetzten Polymer basiert, wobei das erste vernetzte Polymer silanvernetztes HDPE umfasst und das vernetzte Polymer einen Vernetzungsgrad von ≥30% bis ≤80% aufweist. Durch den erfindungsgemäßen Vernetzungsgrad lässt sich die Widerstandsfähigkeit der äußeren Oberflächenbeschichtung deutlich verbessern. Dieser Vernetzungsgrad führt beispielsweise zu einer erhöhten Schlagzähigkeit und Kerbschlagzähigkeit, wodurch die Stahlrohrleitung in Umgebungen mit einer hohen mechanischen Beanspruchung eingesetzt werden kann.

Die erfindungsgemäße Stahlrohrleitung kann eine mehrlagige Oberflächenbeschichtung aufweisen, wobei eine erste untere Lage eine Epoxyschicht ist, eine zweite mittlere Lage eine Haftvermittlerschicht ist, eine dritte obere Lage eine HDPE-Schicht mit einer bimodalen Molekulargewichtsverteilung ist und eine vierte äußere Lage, bei der es sich um die silanvernetzte HDPE-Schicht handelt. Durch diesen Aufbau lassen sich besonders vorteilhaft die Anforderungen and die Stahlrohrleitung bei Transport, Verlegung und Betrieb unter ungünstigen Umweltbedingungen begegnen.

Die silanvernetzte Polymerschicht der Stahlrohrleitung trägt unter anderem aufgrund ihrer Vernetzung vorteilhaft zu ihren Eigenschaften bei. In einer bevorzugten Ausführungsform der vorliegenden Erfindung weist die silanvernetzte HDPE-Schicht der Stahlrohrleitung einen Siliziumgehalt von ≥0.10 Gewichts-% bis ≤1.00 Gewichts-%, bevorzugt ≥0.30 Gewichts-% bis ≤0.40 Gewichts-%, mehr bevorzugt ≥0.33 Gewichts-% bis ≤0.35 Gewichts-% auf. Bei solchen Siliziumgehalten werden die gewünschten Eigenschaften wie Dehnung, Bruchdehnung, Schlagzähigkeit oder Kerbschlagzähigkeit erreicht, ohne übermäßiges siliziumhaltiges Material mitzuführen. Die Bestimmung des Siliziumgehalts kann nach den dem Fachmann geläufigen Methoden wie Elementaranalyse oder Atomabsorptionsspektroskopie erfolgen.

Wie bereits ausgeführt, trägt die silanvernetzte Polymerschicht vorteilhaft zu den Eigenschaften der Beschichtung und damit zur Verwendbarkeit der Stahlrohrleitung bei. So weist in einer weiteren bevorzugten Ausführungsform der vorliegenden Erfindung die silanvernetzte HDPE-Schicht der Stahlrohrleitung eine Bruchdehnung -45 °C gemessen von ≥135% bis ≤400%, bevorzugt ≥200% bis ≤300%, noch mehr bevorzugt ≥240% bis ≤260% auf. Somit ist ein Einsatz der Stahlrohrleitung beispielsweise in einem Permafrostboden möglich.

In einer weiteren bevorzugten Ausführungsform der vorliegenden Erfindung erreicht die silanvernetzte HDPE-Schicht der Stahlrohrleitung im environmental stress crack resistance (ESCR-) Test (FNCT bei 4.0 MPa, 80 °C) eine Zeit von ≥100 h bis ≤10000 h, bevorzugt ≥500 h bis ≥2000 h, mehr bevorzugt ≥900 h bis ≤1100 h. Somit ist die Stahlrohrleitung widerstandsfähig gegen widrige Umwelteinflüsse.

Ebenfalls stellt die Erfindung eine Beschichtung bereit, die nach einem erfindungsgemäßen Verfahren herstellbar ist. Die Beschichtung kann beispielsweise folgende Zusammensetzung umfassen:
- Epoxidharz mit einer Schichtdicke von ≥0.08 mm bis ≤0.16 mm, bevorzugt ≥0.10 mm bis ≤0.13 mm, noch mehr bevorzugt 0.125 mm;
- Haftvermittlers mit einer Schichtdicke von von ≥0.15 mm bis ≤0.30 mm, bevorzugt ≥0.22 mm bis ≤0.27 mm, noch mehr bevorzugt 0.25 mm;
- HDPE-Deckschicht mit einer Schichtdicke von von ≥2.8 mm bis ≤3.2 mm, bevorzugt ≥2.9 mm bis ≤3.1 mm, noch mehr bevorzugt 3 mm;
- Silanvernetzbare HDPE-Schicht mit einer Schichtdicke von von ≥0.8 mm bis ≤1.2 mm, bevorzugt ≥0.9 mm bis ≤1.1 mm, noch mehr bevorzugt 1 mm.

Als Vorteil der silanvernetzten Beschichtung ist ihre geringe Wärmedehnung zu sehen. So beträgt bei einer weiteren bevorzugten Ausführungsform der vorliegenden Erfindung die Wärmedehnung (hot set) der vernetzten Polymerschicht bei 200 °C, 15 min, ≥70% bis ≤90%, bevorzugt ≥80% bis ≤85%, noch mehr bevorzugt 83%. Hierdurch verformt, erweicht oder zerfließt die Beschichtung auch unter dem Gewicht der Stahlrohrleitung weniger, wenn die Stahlrohrleitung heiße Medien transportiert oder großer Hitze ausgesetzt ist.

Eine weitere vorteilhafte Eigenschaft der silanvernetzten Beschichtung ist ihre Widerstandsfähigkeit gegen Auslaugen durch unpolare Lösungsmittel. So bleibt nach Auslaugen durch solche Lösungsmittel noch genügend vernetztes Material zurück, um funktionelle Stabilität zu gewährleisten. In einer weiteren bevorzugten Ausführungsform der vorliegenden Erfindung beträgt daher der Gelgehalt der vernetzten Polymerschicht ≥50% bis ≤70%, bevorzugt ≥60% bis ≤65%, noch mehr bevorzugt 64%. Somit ist bei Kontakt mit Lösungsmitteln wie Benzin die Gefahr einer Fehlfunktion der Beschichtung verringert.

Ebenso ist es ein Vorteil der erfindungsgemäßen Beschichtung, wenn sie bei Kontakt mit unpolaren Lösungsmitteln möglichst wenig aufquillt, da hierdurch eine Erweichung der Beschichtung auftreten kann. In einer weiteren bevorzugten Ausführungsform der vorliegenden Erfindung beträgt der Quellwert (Xylol) der vernetzten Polymerschicht ≥5% bis ≤10%, bevorzugt ≥9% bis ≤10%, noch mehr bevorzugt 9.2%. Somit ist bei Kontakt mit Lösungsmitteln wie Benzin ebenfalls die Gefahr einer Fehlfunktion der Beschichtung verringert.

Die silanvernetzte Schicht trägt weiterhin vorteilhaft zur Stabilität gegenüber Umwelteinflüssen bei. In einer weiteren bevorzugten Ausführungsform der vorliegenden Erfindung zeigt der ESCR (environmental stress crack resistance)-Wert (Fo-Wert) der vernetzten Polymerschicht nach einer Zeit von >6000 h keinen Bruch. In noch einer weiteren bevorzugten Ausführungsform der vorliegenden Erfindung erreicht zeigt die vernetzte Polymerschicht im ESCR (environmental stress crack resistance)-Test (FNCT bei 4.0 MPa, 80 °C) nach einer Zeit von >1000 h kein Versagen. Durch die hohe Spannungsrissfestigkeit wird ein Einsatz der Beschichtung für Rohre in Gebieten mit hoher Sonneneinstrahlung wie den Wüstengebieten möglich.

Ein weiterer Vorteil der silanvernetzten Beschichtung ist, dass sie eine geringe Kriechneigung aufweist, sich also unter Zug möglichst wenig dehnt. So beträgt in einer weiteren bevorzugten Ausführungsform der vorliegenden Erfindung die Dehnung der vernetzten Polymerschicht im Zeitstand-Zugversuch bei 23 °C/96 h an der Deckschicht gemessen ≥0.3% bis ≤0.9%, bevorzugt ≥0.5% bis ≤0.7%, noch mehr bevorzugt 0.6%. Wird eine solche Beschichtung auf einen Träger gestützt, ist ein Kriechen der Beschichtung und somit eine Schwächung wenig zu befürchten.

Weitere Vorteile der silanvernetzten Beschichtung seien nachfolgend genannt. So weist in einer weiteren bevorzugten Ausführungsform der vorliegenden Erfindung die Schlagzähigkeit der vernetzten Polymerschicht bei -100 °C keinen Bruch (no break) auf. In noch einer weiteren bevorzugten Ausführungsform der vorliegenden Erfindung weist die Kerbschlagzähigkeit der vernetzten Polymerschicht bei -40°C keinen Bruch (no break) auf. Solche Schlagzähigkeiten und Kerbschlagzähigkeiten ermöglichen es, die erfindungsgemäße Beschichtung mit geringerem Aufwand zu transportieren, da weniger Vorsichtsmaßnahmen getroffen werden müssen. Weiterhin überdauern solche Beschichtungen länger in Regionen, in denen mit Steinschlag zu rechnen ist, da sie weniger stark beschädigt werden.

In einer weiteren bevorzugten Ausführungsform der vorliegenden Erfindung beträgt die Reißfestigkeit der vernetzten Polymerschicht bei 23 °C ≥15 MPa bis ≤20 MPa, bevorzugt ≥16 MPa bis ≤17 MPa, noch mehr bevorzugt 16.5 MPa. Eine hohe Reißfestigkeit ist beispielsweise günstig, wenn die silanvernetzte Schicht plötzlichen Scherbelastungen ausgesetzt wird, wie es bei starken Windeinwirkungen auf eine mit der erfindungsgemäßen Beschichtung versehenen und nicht im Boden verlegten Rohrleitung auftreten kann.

In einer weiteren bevorzugten Ausführungsform der vorliegenden Erfindung beträgt die Bruchdehnung der vernetzen Polymerschicht bei -45 °C ≥230% bis ≤270%, bevorzugt ≥240% bis ≤260%, noch mehr bevorzugt 250%. Eine hohe Bruchdehnung bei solch einer tiefen Temperatur ist beispielsweise günstig, wenn die silanvernetzte Schicht in einen Permafrostboden verlegt werden soll und ein Verspröden zu vermeiden ist.

Der Gegenstand der vorliegenden Erfindung wird anhand der Figuren 1 bis 3 weiter erläutert.
Fig. 1 zeigt ein erfindungsgemäßes Verfahren zur Beschichtung von Gegenständen.
Fig. 2 zeigt ein weiteres erfindungsgemäßes Verfahren zur Beschichtung von Gegenständen.
Fig. 3 zeigt einen Querschnitt durch eine erfindungsgemäß beschichtete Rohrleitung.

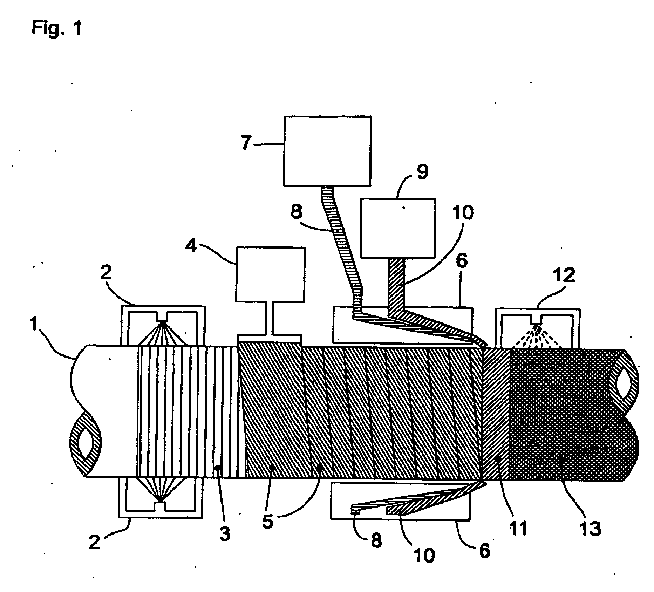

Fig. 1 zeigt eine zuvor gestrahlte und erwärmte Stahlrohrleitung (1), welche in einem ersten Schritt in einer elektrostatischen Pulversprühanlage (2) mit einer Grundierungsschicht aus Epoxidharz (3) überzogen wird. Anschließend wird mittels eines Wickelextruders (4) eine Schicht eines gängigen Haftvermittlers (5) aufgetragen. Weiter in Laufrichtung der Stahlrohrleitung fließen durch eine Ringdüse (6) Materialströme aus einem weiteren Extruder (7), der Polyethylen fördert (8) und noch einem weiteren Extruder (9), der ein silanvernetzbares Polyethylen fördert (10). Diese beiden Materialströme werden auf die Stahlrohrleitung coextrudiert (11). Als letzter Schritt findet in einer Berieselungsanlage (12) das Berieseln der obersten Kunststoffschicht mit Wasser statt zwecks Quervernetzung des vernetzbaren Polymers unter Ausbildung der silanvernetzten Schicht (13).

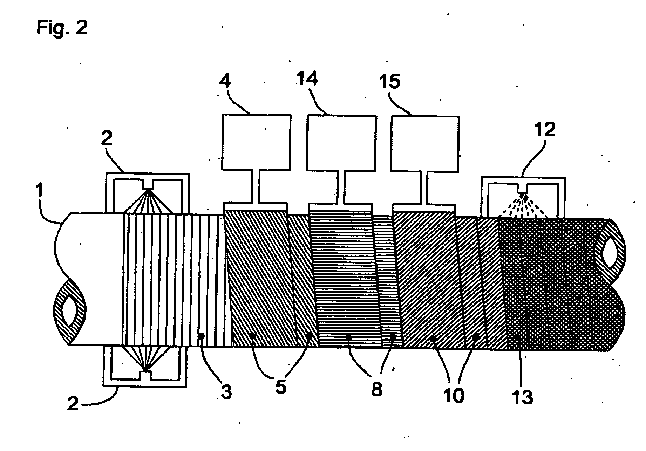

Fig. 2 zeigt eine zuvor gestrahlte und erwärmte Stahlrohrleitung (1), welche in einem ersten Schritt in einer elektrostatischen Pulversprühanlage (2) mit einer Grundierungsschicht aus Epoxidharz (3) überzogen wird. Anschließend wird mittels eines Wickelextruders (4) eine Schicht eines gängigen Haftvermittlers (5) aufgetragen. Weiter in Laufrichtung der Stahlrohrleitung wird durch einen weiteren Wickelextruder (14) eine Polyethylenschicht (8) aufgetragen. Mittels noch eines weiteren Wickelextruders (15) wird eine Schicht aus silanvernetzbarem Poylethylen (10) aufgetragen. Als letzter Schritt findet in einer Berieselungsanlage (12) das Berieseln der obersten Kunststoffschicht mit Wasser statt zwecks Quervernetzung des vernetzbaren Polymers unter Ausbildung der silanvernetzten Schicht (13).

So ist es möglich, dass die beschichteten Stahlrohrleitungen bereits nach Verlassen der Kühlstrecke eine vernetzten äußere Schicht mit einem Vernetzungsgrad von >50% aufweisen, so dass eine weitere, zusätzliche Vernetzung nicht mehr nötig ist.

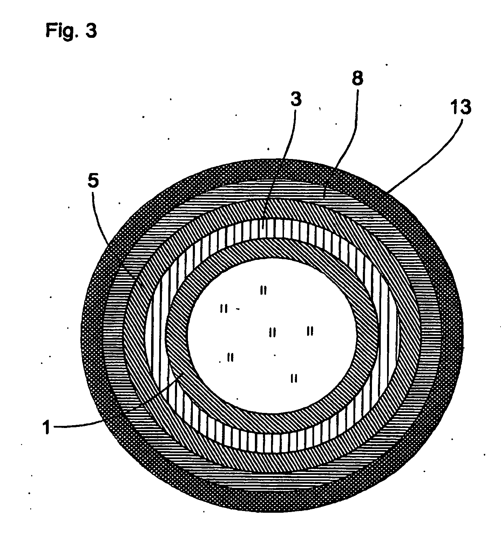

Fig. 3 zeigt einen Querschnitt durch eine erfindungsgemäß beschichtete Stahlrohrleitung. Auf einer zuvor gestrahlten und erwärmten Stahlrohrleitung (1) befindet sich zunächst eine Grundierungsschicht aus Epoxidharz (3). Über dieser Schicht befindet sich eine Schicht eines gängigen Haftvermittlers (5). Darüber befindet sich Polyethylenschicht (8). Als äußerste Schicht ist eine silanvernetzte Schicht (13) angebracht.

Das erfindungsgemäße Verfahren wird nachfolgend anhand des Beispiels 1 und des Vergleichsbeispiels weiter erläutert.

### Beispiel 1

Eine gestrahlte Stahlrohrleitung (Durchmesser 48 Zoll) wurde auf 200°C vorgeheizt. Auf diese Stahlrohrleitung wurden nacheinander folgende Schichten aufgebracht:
- Als 1. Schicht ein übliches Epoxidharz durch elektrostatisches Pulversprühverfahren mit einer Dicke von ca. 0.12 mm aufgebracht,
- unmittelbar auf diese Schicht wurde ein gängiger Haftvermittler mittels Wickelextrusionsverfahren appliziert, dessen Dicke ca. 0.25 mm betrug,
- auf diese Schicht wurde dann ein ebenfalls gängiges HDPE-Deckschichtmaterial mit einer Dicke von ca. 3 mm extudiert,
- mittels einer direkt dahinter angeordneten 2. Düse erfolgte die erfindungsgemäße Aufbringung der silanvernetzbaren letzten Schicht in einer Dicke von ca. 1 mm auf das zuvor aufgebrachte, noch im Schmelzezustand befindliche PE-Deckschichtmaterial.

Dieses Verfahren gewährleistet eine gute Verschweißung der PEX-Schicht mit der zuvor aufgebrachten thermoplastischem PE-Schicht. Da zum Zeitpunkt der Applizierung die PEX-Schicht noch unvernetzt ist, ist insbesondere bei dem Wickelverfahren eine ebenfalls gute Verschweißung im Überlappungsbereich der gewickelten Folien gegeben. Die Verfahrensparameter sowie die Eigenschaften der so beschichten Rohrleitungen sind in den Tabellen 1 und 2 zusammengestellt.

### Vergleichsbeispiel

Analog zu der in dem Beispiel 1 beschriebenen Vorgehensweise wurden Rohrleitungen unter identischen Einstellungen beschicht, allerdings ohne PEX-Schicht. Im Gegensatz zu dem Versuch mit der PEX-Schicht mussten hier die beschichteten Rohrleitungen rascher abgekühlt werden, um Beschädigungen der thermoplastischen PE-Deckschicht in der Kühlstrecke zu vermeiden. Die Verfahrensparameter sowie die Eigenschaften der so beschichten Rohrleitungen sind in den Tabellen 1 und 2 zusammengestellt.

**Tabelle 1: Verfahrensparameter**

| | **Einheit** | **Beispiel** | **Vergleichsbeispiel** |
|---|---|---|---|
| Rohrleitungstemperatur | °C | 190 bis 210 | 190 bis 210 |
| Epoxy | | Fusion Bonded Epoxy | Fusion Bonded Epoxy |
| Dicke der Epoxy-Schicht | mm | 0.125 | 0.125 |
| Haftvermittler | | HDPE-Copolymer mit polaren Gruppen und einer Dichte von 0.931 g/cm³, einer Schmelzflussrate von 3 g/10 min (190°C/2.16 kg) und einem Zugmodul von 74 MPa (23 °C) | HDPE-Copolymer mit polaren Gruppen und einer Dichte von 0.931 g/cm³, einer Schmelzflussrate von 3 g/10 min (190°C/2.16kg) und einem Zugmodul von 74 MPa (23 °C) |
| Dicke der Haftvermittlerschicht | mm | 0.25 | 0,25 |
| Extrusionstemperatur Haftvermittler | °C | 220 bis 230 | 220 bis 230 |
| PE-Decklage | | Bimodales HDPE mit einer Dichte von 0.956 g/cm³, einer Schmelzflussrate von 0.3 g/10 min (190°C/2.16 kg) und einem Zugmodul von 900 MPa (23 °C) | Bimodales HDPE mit einer Dichte von 0.956 g/cm³, einer Schmelzflussrate von 0.3 g/10 min (190°C/2.16kg) und einem Zugmodul von 900 MPa (23 °C) |
| Dicke der PE-Decklage | mm | 3 | 3 |
| Extrusionstemperatur PE-Decklage | °C | ca. 230 | ca. 230 |
| Silanvernetzbares HDPE | | HDPE mit einer Dichte von 0.952 g/cm³, einer Schmelzflussrate von 6.5 g/10 min (190°C/2.16 kg) und einem Zugmodul von 1000 MPa (23 °C); gepfropft mit 1.8 Gew.-% Vinyltrimethoxysilan | - |
| Dicke der äußeren silanvernetzbaren PE-Schicht (PEXb) | mm | ca. 1 | - |
| Extrusionstemperatur der PEX-Schicht | °C | 240 | - |
| Liniengeschwindigkeit | m/min | 2 | 2 |
| Rohrleitungtemperatur vor Beginn der Kühlung | °C | 190 | 195 |
| Oberflächentemperatur der Beschichtung | °C | ca. 240 | ca. 235 |
| Temperatur Kühlwasser | °C | 25° C | 25° C |
| Oberflächentemperatur der Beschichtung nach Durchlaufen der Kühlstrecke | °C | 60 | ca. 30 |
| Rohrleitungstemperatur nach Durchlaufen der Kühlstrecke | °C | 60 bis 80 | ca. 40 |
| Verweilzeit der Rohrleitung in der Kühlstrecke | min | 16 | 16 |

**Tabelle 2: Eigenschaften der Beschichtung**

| | | | |
|---|---|---|---|
| Hinweis: Die Eigenschaftswerte für Beispiel 1 beziehen sich, soweit nichts anderes angegeben, auf die reine PEX-Schicht. | | | |

| **Eigenschaften** | **Einheit** | **Beispiel 1** | **Vergleichsbeispiel** |
|---|---|---|---|
| Wärmedehnung (HOT SET) | % | 83 | Nicht bestimmbar |
| Gelgehalt | % | 64 | Nicht bestimmbar |
| Quellwert | % | 9.2 | Nicht bestimmbar |
| ESCR (F₀-Wert) | h | >6000 | 3000 |
| ESCR (FNCT bei 4.0 MPa; 80 °C) | h | > 1000 | 60 |
| Dehnung im Zeitstand-Zugversuch bei 23 °C/ 96 h | % | 0.6 | 1.96 |
| Schlagzähigkeit bei -100 °C | kJ/m² | No break | Break |
| Kerbschlagzähigkeit -40°C | kJ/m² | No break | 4.3 |
| Reißfestigkeit bei 23 °C | MPa | 16.5 | 15.5 |
| Bruchdehnung bei -45 °C | % | 250 | 130 |

Nachstehend werden im einzelnen die verwendeten Messmethoden beschrieben.

### 1. Wärmedehnung (hot set)

Die Wärmedehnung (hot set) der Beschichtung wurde in Anlehnung an die DIN VDE 0472 T615 wie folgt bestimmt: Von der quervernetzten Schicht wurde ein Probekörper in Form eines Rechteckes (100x 10mm) entnommen und frei hängend in einem Wärmeschrank bei 200 °C eingebracht und mit 20 N/cm² belastet. Nach 15 min wird die Dehnung des Probekörpers gemessen. Die Wärmedehnung ist die Längenänderung des Probekörpers in %.

### 2. Vernetzungsgrad

Der Vernetzungsgrad der Beschichtung wurde in Anlehnung an die ISO 10147 wie folgt bestimmt: Von der quervernetzten Schicht wurde eine Probe in Form eines Rechteckes (20x5mm) entnommen, auf 1 mg genau gewogen und in einen Behälter aus Drahtnetzen gelegt. Der Behälter mit der eingelegten Probe wird in einen 2-Liter Glaskolben mit Rückflusskühler eingebracht. In den Glaskolben werden ca. 500 ml technisch reines Xylol gegeben und zum Sieden gebracht. Nach 8 Stunden Refluxieren entnimmt man den Behälter aus dem Glaskolben. Die Probe wird vorsichtig aus dem Behälter herausgenommen und im Vakkuum-Trockenschrank für mind. 3 h bei 150 °C getrocknet. Nach Abkühlen auf Raumtemperatur wird das Gewicht der Probe auf 1 mg genau gewogen.
Der Vernetzungsgrad G ist das Restgewicht der Probe, bezogen auf das vorher gemessene Gesamtgewicht in %.

### 3. Quellwert

Von der quervernetzten Schicht wird eine Probe in Form eines Rechteckes (20x5mm) entnommen, auf 1 mg genau gewogen und in ein Reagenzglas eingebracht. Letzteres wird mit technisch reinem Xylol bis etwa zu einem Drittel aufgefüllt und mit einem Korkstopfen verschlossen. Das Reagenzglas wird in einem Thermostaten 2 Stunden auf 140°C gehalten. Danach wird der Inhalt des Reagenzglases über ein engmaschiges Drahtnetz (Maschendichte 400/cm²) entleert, die gequollene Probe vorsichtig vom Drahtnetz entnommen, auf ein Uhrglas gelegt und gewogen. Der Quellwert errechnet sich aus dem Gewicht der gequollenen Probe im Verhältnis zum Gewicht der nicht gequollenen Probe.

### 4. Spannungsrissfestigkeit ESCR nach ASTM D 1693

Die Spannungsrissfestigkeit der quervernetzten Schicht wurde nach den Vorgaben der ASTM D 1693 bestimmt. Angeben ist der F₀-Wert, der die Prüfzeit angibt, bis zu der noch kein Versagen der Prüfkörper beobachtet werden konnte.

### 5. Spannungsrissfestigkeit ESCR (FNCT)

Die Spannungsrissfestigkeit (FNCT) der quervernetzten Schicht wird nach einer internen Messmethode ermittelt und in h angegeben. Diese Labormethode ist von M. Fleißner in Kunststoffe 77 (1987), S. 45 ff, beschrieben und entspricht der inzwischen geltenden ISO/CD 16770. Eine Verkürzung der Zeit bis zum Versagen wird durch die Verkürzung der Rissinitiierungszeit durch die Kerbe (1,6 mm/Rasierklinge) in Arkopal als spannungsrissförderndem Medium bei einer Temperatur von 80 °C und einer Zugspannung von 4 MPa erreicht. Die Probenherstellung erfolgt, indem drei Probekörper mit den Abmessungen 10 x 10 x 90 mm, die aus der quervernetzten Schicht hergestellt wurden. Die Probekörper werden rundum mit einer Rasierklinge in einer eigens dafür angefertigten Kerbvorrichtung (siehe Abbildung 5 in der Publikation) in der Mitte gekerbt. Die Kerbtiefe beträgt 1,6 mm.

### 6. Dehnung im Zeitstand-Zugversuch

Die Dehnung im Zeitstand-Zugversuch wurde bei einer Spannung von 5 MPa bei 23°C nach 96 h gemäß den Vorgaben der DIN EN ISO 899 bestimmt.

### 7. Schlagzähigkeit bei -100 °C

Die Schlagzähigkeit wurde nach ISO 180/U bei -100°C ermittelt.

### 8. Kerbschlagzähigkeit bei -40°C

Die Kerbschlagzähigkeit wurde nach der ISO 179-1/1eA / DIN 53453 bei -40 °C gemessen. Dazu wurde aus der PEXb-Schicht ein Probekörper mit der Dimension 10 x 4 x 80 mm hergestellt, wobei eine V-Kerbe mit einem Winkel von 45°, einer Tiefe von 2 mm und einem Kerbgrundradius von 0,25 mm eingenutet wird.

### 9. Reißfestigkeit bei 23 °C

Die Reißfestigkeit wurde nach ISO 527 Teil 2 am Prüfkörper Typ 1A mit einer Dicke von 1 mm bei 23 °C bestimmt. Die Proben wurden mit einer Geschwindigkeit von 50 mm/min gezogen. Die

### 10. Bruchdehnung bei -45 °C

Die Bruchdehnung wurde nach ISO 527 Teil 2 am Prüfkörper Typ 1A mit einer Dicke von 1 mm bei - 45 °C bestimmt. Die Proben wurden mit einer Geschwindigkeit von 10 mm/min gezogen.

### 11. Schmelzflussrate 190°C/2.16 kg

Die Schmelzflussrate 190°C/2.16 kg der eingesetzten Polymere wurde nach ISO 1133 bestimmt.

### 12. Zugmodul

Das Zugmodul der eingesetzten Polymere wurde nach ISO 527 Teil 2 am Prüfkörper 1A, Dicke 1 mm bestimmt.

## Patentansprüche

1. Verfahren zum Beschichten von äußeren Oberflächen von Stahlrohrleitungen mit unter Wassereinwirkung vernetzbarem Polymer, **umfassend** die Schritte:
a) Beschichten der äußeren Oberfläche der Stahlrohrleitung mit wenigstens einem unter Wassereinwirkung vernetzbaren Polymer, wobei das verwendete vernetzbare Polymer alkoxysilangepfropftes HDPE umfasst;
b) Vernetzung des vernetzbaren Polymers mittels Einwirkung von Wasser bei erhöhter Temperatur unter Ausbildung einer vernetzten Polymerschicht, bis man einen Vernetzungsgrad von ≥30% bis ≤80% erreicht.

2. Verfahren nach Anspruch 1, **dadurch gekennzeichnet, dass** der Siliziumgehalt der vernetzten Polymerschicht ≥0.10 Gewichts-% bis ≤1.00 Gewichts-%, bevorzugt ≥0.30 Gewichts-% bis ≤0.40 Gewichts-%, mehr bevorzugt ≥0.33 Gewichts-% bis ≤0.35 Gewichts-% beträgt.

3. Verfahren nach Ansprüchen 1 und 2, **dadurch gekennzeichnet, dass** der Zeitraum des Wasserbehandlungsschrittes zur Vernetzung der Polymerschicht ≥0.5 Minuten bis ≤5.0 Minuten, bevorzugt ≥1.0 Minuten bis ≤3.0 Minuten, mehr bevorzugt ≥1.9 Minuten bis ≤2.1 Minuten pro Meter der sich in Längsrichtung bewegenden Stahlrohrleitung beträgt.

4. Verfahren nach Ansprüchen 1 bis 3, **dadurch gekennzeichnet, dass** die Vernetzung des unter Wassereinwirkung vernetzbaren Polymers bei einer Temperatur von ≥50 °C bis ≤350 °C, bevorzugt≥150 °C bis ≤300 °C, noch mehr bevorzugt≥220 °C bis ≤260 °C erfolgt.

5. Verfahren nach Ansprüchen 1 bis 4, **umfassend** die folgenden Schritte:
- Aufheizen einer Stahlrohrleitung auf ≥170 °C bis ≤230 °C, bevorzugt ≥180 °C bis ≤220 °C, noch mehr bevorzugt auf ≥190 °C bis ≤210 °C;
- Auftragen eines Epoxidharzes durch ein elektrostatisches Pulversprühverfahren mit einer Schichtdicke von ≥0.08 mm bis ≤0.16 mm, bevorzugt ≥0.10 mm bis ≤0.13 mm,
• noch mehr bevorzugt 0.125 mm;
- Auftragen eines Haftvermittlers mittels Wickelextrusionsverfahren mit einer Schichtdicke von ≥0.15 mm bis ≤0.30 mm, bevorzugt ≥0.22 mm bis ≤0.27 mm, noch mehr bevorzugt 0.25 mm;
- Auftragen einer HDPE-Deckschicht mittels Extrusion mit einer Schichtdicke von ≥2.8 mm bis ≤3.2 mm, bevorzugt ≥2.9 mm bis ≤3.1 mm, noch mehr bevorzugt 3 mm;
- Auftragen einer alkoxysilangepfropftes HDPE umfassenden Polymerschicht mittels Extrusion mit einer Schichtdicke von ≥0.8 mm bis ≤1.2 mm, bevorzugt ≥0.9 mm bis ≤1.1 mm, noch mehr bevorzugt 1 mm;
- Behandeln der Stahlrohrleitung mit Wasser, wobei das Wasser vorzugweise eine Temperatur von ≥10 °C bis ≤40 °C, bevorzugt ≥20 °C bis ≤30 °C, noch mehr bevorzugt 25 °C aufweist.

6. Verfahren nach Ansprüchen 1 bis 5, **dadurch gekennzeichnet, dass** die Bruchdehnung der Beschichtung bei -45 °C gemessen ≥135% bis ≤400%, bevorzugt ≥200% bis ≤300%, noch mehr bevorzugt ≥240% bis ≤260% beträgt.

7. Verfahren nach Ansprüchen 1 bis 6, **dadurch gekennzeichnet, dass** die Beschichtung im environmental stress crack resistance (ESCR-) Test (FNCT bei 4.0 MPa, 80 °C) über einen Zeitraum von ≥100 h bis ≤10000 h, bevorzugt ≥500 h bis ≤2000 h und weiter bevorzugt ≥900 h bis ≤1100 h stabil bleibt.

8. Verfahren nach Ansprüchen 1 bis 7, **dadurch gekennzeichnet, dass** man die äußere Oberfläche der Stahlrohrleitung mit mindestens zwei unterschiedlichen Lagen, vorzugsweise mit mindestens drei Lagen und bevorzugt mit mindestens vier unterschiedlichen Lagen beschichtet.

9. Stahlrohrleitung, umfassend mindestens eine äußere Oberflächenbeschichtung, die auf einem ersten vernetzten Polymer basiert, wobei das erste vernetzte Polymer silanvernetztes HDPE umfasst und das vernetzte Polymer einen Vernetzungsgrad von ≥30% bis ≤80% aufweist.

10. Stahlrohrleitung nach Anspruch 9, **dadurch gekennzeichnet, dass** die Stahlrohrleitung eine mehrlagige Oberflächenbeschichtung aufweist, wobei eine erste untere Lage eine Epoxyschicht ist, eine zweite ntittlere Lage eine Haftvermittlerschicht ist, eine dritte obere Lage eine HDPE-Schicht mit einer bimodalen Molekulargewichtsverteilung ist und eine vierte äußere Lage, bei der es sich um die silanvernetzte HDPE-Schicht handelt.

11. Stahlrohrleitung nach Anspruch 9 oder 10, **wobei** die silanvernetzte HDPE-Schicht einen Siliziumgehalt von ≥0.10 Gewichts-% bis ≤1.00 Gewichts-%, bevorzugt ≥0.30 Gewichts-% bis ≤0.40 Gewichts-%, mehr bevorzugt≥0.33 Gewichts-% bis ≤0.35 Gewichts-% aufweist.

12. Stahlrohrleitung nach einem der Ansprüche 9 bis 11, **wobei** die silanvemetzte HDPE-Schicht eine Bruchdehnung -45 °C gemessen von ≥135% bis ≤400%, bevorzugt ≥200% bis ≤300%, noch mehr bevorzugt ≥240% bis ≤260% ausweist.

13. Stahlrohrleitung nach einem der Ansprüche 9 bis 12, **wobei** die silanvernetzte HDPE-Schicht im environmental stress crack resistance (ESCR-) Test (FNCT bei 4.0 MPa, 80 °C) über einen Zeitraum von ≥100 h bis ≤10000 h, bevorzugt ≥500 h bis ≤2000 h und weiter bevorzugt ≥900 h bis ≤1100 h stabil bleibt.

## Claims

1. Process for coating exterior surfaces of steel pipelines with a polymer that is crosslinkable by exposure to water, comprising the steps of:
a) coating the exterior surface of the steel pipeline with at least one polymer crosslinkable by exposure to water, wherein the crosslinkable polymer used comprises alkoxysilane-grafted HDPE;
b) crosslinking the crosslinkable polymer by exposure to water at elevated temperature to form a crosslinked layer of polymer until a degree of crosslinking in the range of ≥ 30% to ≤ 80% is reached.

2. Process according to Claim 1, **characterized in that** the silicon content of the crosslinked layer of polymer is ≥ 0.10% by weight to ≤ 1.00% by weight, preferably ≥ 0.30% by weight to ≤ 0.40% by weight and more preferably ≥ 0.33% by weight to ≤ 0.35% by weight.

3. Process according to Claims 1 and 2, **characterized in that** the duration of the water treatment step for crosslinking the layer of polymer is ≥ 0.5 minutes to ≤ 5.0 minutes, preferably ≥ 1.0 minutes to ≤ 3.0 minutes and more preferably from ≥ 1.9 minutes to ≤ 2.1 minutes per meter of the steel pipeline moving in the longitudinal direction.

4. Process according to Claims 1 to 3, **characterized in that** the crosslinking of the polymer crosslinkable by exposure to water is effected at a temperature of ≥ 50°C to ≤ 350°C, preferably ≥ 150°C to ≤ 300°C and more preferably ≥ 220°C to ≤ 260°C.

5. Process according to Claims 1 to 4, comprising the following steps:
- heating a steel pipeline to ≥ 170°C to ≤ 230°C, preferably ≥ 180°C to ≤ 220°C and more preferably to ≥ 190°C to ≤ 210°C;
- applying an epoxy resin by an electrostatic process of powder spraying to a layer thickness of ≥ 0.08 mm to ≤ 0.16 mm, preferably ≥ 0.10 mm to ≤ 0.13 mm and more preferably 0.125 mm;
- applying an adhesion promoter by means of extrusion-wrapping processes to a layer thickness of ≥ 0.15 mm to ≤ 0.30 mm, preferably ≥ 0.22 mm to ≤ 0.27 mm and more preferably 0.25 mm;
- applying an HDPE cover layer by extrusion to a layer thickness of ≥ 2.8 mm to ≤ 3.2 mm, preferably ≥ 2.9 mm to ≤ 3.1 mm and more preferably 3 mm;
- applying a polymer layer comprising alkoxysilane-grafted HDPE by extrusion to a layer thickness of ≥ 0.8 mm to ≤ 1.2 mm, preferably ≥ 0.9 mm to ≤ 1.1 mm and more preferably 1 mm;
- treating the steel pipeline with water, wherein the water preferably has a temperature of ≥ 10°C to ≤ 40°C, preferably ≥ 20°C to ≤ 30°C and more preferably 25°C.

6. Process according to Claims 1 to 5, **characterized in that** the elongation at break of the coating when measured at -45°C is ≥ 135% to ≤ 400%, preferably ≥ 200% to ≤ 300% and more preferably ≥ 240% to ≤ 260%.

7. Process according to Claims 1 to 6, **characterized in that** the coating remains stable for a period of ≥ 100 h to ≤ 10 000 h, preferably ≥ 500 h to ≤ 2000 h and more preferably ≥ 900 h to < 1100 h in the environmental stress crack resistance (ESCR) test (FNCT at 4.0 MPa, 80°C).

8. Process according to Claims 1 to 7, **characterized in that** the exterior surface of the steel pipeline is coated with two or more different layers, preferably with three or more layers and more preferably with four or more different layers.

9. Steel pipeline comprising at least one exterior surficial coating based on a first crosslinked polymer, wherein the first crosslinked polymer comprises silane-crosslinked HDPE and the crosslinked polymer has a degree of crosslinking in the range of from ≥ 30% to ≤ 80%.

10. Steel pipeline according to Claim 9, **characterized in that** the steel pipeline has a multilayered surficial coating, wherein a first lower layer is an epoxy layer, a second middle layer is an adhesion-promoter layer, a third upper layer is an HDPE layer having a bimodal molecular weight distribution and a fourth exterior layer comprising the silane-crosslinked HDPE layer.

11. Steel pipeline according to Claim 9 or 10, wherein the silane-crosslinked HDPE layer has a silicon content of ≥ 0.10 % by weight to ≤ 1.00% by weight, preferably ≥ 0.30% by weight to ≤ 0.40% by weight and more preferably ≥ 0.33% by weight to ≤ 0.35% by weight.

12. Steel pipeline according to any one of Claims 9 to 11, wherein the silane-crosslinked HDPE layer has an elongation at break when measured at -45°C of ≥ 135% to ≤ 400%, preferably ≥ 200% to ≤ 300% and more preferably ≥ 240% to ≤ 260%.

13. Steel pipeline according to any one of Claims 9 to 12, wherein the silane-crosslinked HDPE layer remains stable for a period of ≥ 100 h to ≤ 10 000 h, preferably ≥ 500 h to ≤ 2000 h and more preferably ≥ 900 h to ≤ 1100 h in the environmental stress crack resistance (ESCR) test (FNCT at 4.0 MPa, 80°C).

## Revendications

1. Procédé de revêtement de surfaces extérieures de canalisations en acier avec un polymère pouvant être réticulé sous l'action de l'eau, comprenant les étapes suivantes :
a) revêtement de la surface extérieure de la canalisation en acier avec au moins un polymère pouvant être réticulé sous l'action de l'eau, le polymère pouvant être réticulé utilisé comportant du HDPE à alcoxysilanes greffés ;
b) réticulation du polymère pouvant être réticulé sous l'action de l'eau à température accrue avec formation d'une couche de polymère réticulé jusqu'à ce qu'on obtienne un degré de réticulation de ≥ 30 % à ≤ 80 %.

2. Procédé selon la revendication 1, **caractérisé en ce que** la teneur en silicium de la couche de polymère réticulé vaut de ≥ 0, 10 % en poids à ≤ 1,00 % en poids, de préférence de ≥ 0,30 % en poids à ≤ 0,40 % en poids et encore plus de préférence de ≥ 0,33 % en poids à ≤ 0,35 % en poids.

3. Procédé selon les revendications 1 et 2, **caractérisé en ce que** la durée de l'étape de traitement à l'eau pour la réticulation de la couche de polymère vaut de ≥ 0,5 minute à ≤ 5,0 minutes, de préférence de ≥ 1,0 minute à ≤ 3,0 minutes et encore plus de préférence de ≥ 1,9 minutes à ≤ 2,1 minutes, par mètre de la canalisation en acier se déplaçant dans la direction de la longueur.

4. Procédé selon les revendications 1 à 3, **caractérisé en ce que** la réticulation du polymère pouvant être réticulé sous l'action de l'eau s'effectue à une température de ≥ 50 °C à ≤ 350 °C, de préférence de ≥ 150 °C à ≤ 300 °C et encore plus de préférence de
≥ 220 °C à ≤ 260 °C.

5. Procédé selon les revendications 1 à 4, comprenant les étapes suivantes :
- chauffage d'une canalisation en acier de
≥ 170 °C à ≤ 230 °C, de préférence de ≥ 180 °C à ≤ 220 °C et encore plus de préférence de ≥ 190 °C à ≤ 210 °C ;
- application d'une résine époxy au moyen d'un procédé de pulvérisation électrostatique avec une épaisseur de couche de ≥ 0,08 mm à ≤ 0,16 mm, de préférence de ≥ 0,10 mm à ≤ 0,13 mm et encore plus de préférence de 0,125 mm ;
- application d'un agent adhésif au moyen d'un procédé d'extrusion enroulée avec une épaisseur de couche de ≥ 0,15 mm à ≤ 0,30 mm, de préférence de ≥ 0,22 mm à ≤ 0,27 mm et encore plus de préférence de 0,25 mm ;
- application d'une couche de couverture en HDPE au moyen d'une extrusion avec une épaisseur de couche de ≥ 2,8 mm à ≤ 3,2 mm, de préférence de ≥ 2,9 mm à ≤ 3,1 mm et encore plus de préférence de 3 mm ;
- application d'une couche de polymère comportant du HDPE à alcoxysilanes greffés au moyen d'une extrusion avec une épaisseur de couche de ≥ 0,8 mm à ≤ 1,2 mm, de préférence de ≥ 0,9 mm à ≤ 1,1 mm et encore plus de préférence de 1 mm ;
- traitement de la canalisation en acier avec de l'eau, l'eau ayant de préférence une température de ≥ 10 °C à ≤ 40 °C, de préférence de ≥ 20 °C à ≤ 30 °C et encore plus de préférence de 25 °C.

6. Procédé selon les revendications 1 à 5, **caractérisé en ce que** l'allongement à la rupture du revêtement, mesuré à -45 °C, vaut de ≥ 135 % à ≤ 400 %, de préférence de ≥ 200 % à ≤ 300 % et encore plus de préférence de ≥ 240 % à ≤ 260 %.

7. Procédé selon les revendications 1 à 6, **caractérisé en ce que**, lors du test résistance à la fissuration sous contrainte dans un environnement donné (ESCR) (FNCT à 4,0 MPa, 80 °C), le revêtement reste stable sur une durée de ≥ 100 h à ≤ 10 000 h, de préférence de ≥ 500 h à ≤ 2 000 h et encore plus de préférence de ≥ 900 h à ≤ 1 100 h.

8. Procédé selon les revendications 1 à 7, **caractérisé en ce que** l'on revêt la surface extérieure de la canalisation en acier avec au moins deux couches différentes, de préférence avec au moins trois couches et de préférence avec au moins quatre couches différentes.

9. Canalisation en acier, comprenant au moins un revêtement de surface extérieure qui est basé sur un premier polymère réticulé, le premier polymère réticulé comprenant du HDPE réticulé au silane et le polymère réticulé ayant un degré de réticulation de ≥ 30 % à ≤ 80 %.

10. Canalisation en acier selon la revendication 9, **caractérisée en ce que** la canalisation en acier comporte un revêtement de surface en plusieurs couches, une première couche inférieure étant une couche époxy, une deuxième couche médiane étant une couche d'agent adhésif, une troisième couche supérieure étant une couche HDPE avec distribution de poids moléculaire bimodale et une quatrième couche extérieure étant la couche HDPE réticulée au silane.

11. Canalisation en acier selon la revendication 9 ou 10, la couche HDPE réticulée au silane ayant une teneur en silicium de ≥ 0,10 % en poids à ≤ 1,00 % en poids, de préférence de ≥ 0,30 % en poids à ≤ 0,40 % en poids et encore plus de préférence de ≥ 0,33 % en poids à ≤ 0,35 % en poids.

12. Canalisation en acier selon l'une des revendications 9 à 11, la couche HDPE réticulée au silane ayant un allongement à la rupture, mesuré à -45 °C, de ≥ 135 % à ≤ 400 %, de préférence de ≥ 200 % à ≤ 300 % et encore plus de préférence de ≥ 240 % à ≤ 260 %.

13. Canalisation en acier selon l'une des revendications 9 à 12, dans laquelle la couche HDPE réticulée au silane reste stable, lors du test résistance à la fissuration sous contrainte dans un environnement donné (ESCR) (FNCT à 4,0 MPa, 80 °C), sur une durée de ≥ 100 h à ≤ 10 000 h, de préférence de ≥ 500 h à ≤ 2 000 h et encore plus de préférence de ≥ 900 h à ≤ 1 100 h.
